# EUROPÄISCHE PATENTSCHRIFT

(11) **EP 0 675 006 B1**
(45) Veröffentlichungstag und Bekanntmachung des Hinweises auf die Patenterteilung: **24.05.2000**
(21) Anmeldenummer: 95104656.4
(22) Anmeldetag: 29.03.1995
(51) Int. Cl.: B42D 15/10

(54) **Transfermaterial zum Übertragen von optisch variablen Einzelelementen auf zu sichernde Gegenstände**
Transfer material with optically variable individual elements transferable onto objects to be protected
Matériau de transfert avec des éléments individuels optiquement variables transférable sur des objets à protéger

(30) Priorität: 31.03.1994 DE 4411404
(43) Veröffentlichungstag der Anmeldung: 04.10.1995
(73) Patentinhaber: Giesecke & Devrient GmbH, 81677 München (DE)
(72) Erfinder: Kaule, Wittich, Dr., D-82275 Emmering (DE)
(74) Vertreter: Klunker . Schmitt-Nilson . Hirsch

(56) Entgegenhaltungen:
- EP-A- 0 466 118
- EP-A- 0 537 439
- DE-A- 4 130 896
- US-A- 4 758 296
- US-A- 5 116 548

## Beschreibung

Die Erfindung betrifft ein Transfermaterial zum Übertragen von optisch variablen Elementen auf zu sichernde Gegenstände, insbesondere Wertdokumente, wie Banknoten oder Ausweiskarten, bestehend aus einem Trägersubstrat, das eine Schicht aufweist, in welche Beugungsstrukturen in Form eines Reliefs eingebracht sind, und welche mit einer reflektierenden Schicht kombiniert ist.

Optisch variablen Elementen, wie Hologrammen oder Interferenzschichtelementen, kommt aus verschiedenen Gründen auf vielen Gebieten immer größere Bedeutung zu. So zeigen diese Elemente in der Regel abhängig vom Betrachtungswinkel unterschiedliche Farben. Es können jedoch auch unterschiedliche Informationen enthalten sein, die lediglich unter bestimmten Betrachtungswinkeln erkennbar sind. Auf dem Gebiet der Absicherung von Gegenständen der verschiedensten Art gegen Fälschung, Verfälschung oder Manipulationen anderer Art haben Hologramme und ähnliche Beugungsstrukturen vielfältige Anwendung gefunden, da die winkelabhängigen Effekte nur mit unverhältnismäßig hohem Aufwand nachgeahmt werden können. Andererseits ermöglichen optisch variable Element eine schnelle visuelle Überprüfung und bieten einen guten Kopierschutz, da die winkelabhängigen Effekte von einem Kopiergerät nicht reproduziert werden können.

Für die Sicherung von Wertdokumenten, wie Ausweiskarten oder Banknoten, werden häufig Reflexions-Hologramme eingesetzt. Diese werden üblicherweise mittels spezieller Prägematrizen erzeugt, die ein dem Beugungsmuster des Hologramms entsprechendes Oberflächenrelief aufweisen, indem das Oberflächenrelief in eine Lackschicht eingeprägt, anschließend metallisiert und mit einer Schutzschicht versehen wird. Die Metallisierung sorgt für die Brillanz des Hologramms, so daß es visuell gut erkennbar ist.

Es wurden bereits verschiedene Möglichkeiten vorgeschlagen, derartige Hologramme in lokal begrenzter Form auf Wertdokumente aufzubringen. Eine der bewährtesten Techniken ist das Vorbereiten eines separaten, kontinuierlichen Transferbandes, von dem das Hologramm in der gewünschten Kontur plaziert auf das Dokument übertragen wird (DE-A1 33 08 831). Hierbei werden auf ein Substrat, das mit einer leicht ablösbaren Trennschicht versehen ist, die zu transferierenden Schichten vollflächig und in umgekehrter Reihenfolge, wie sie später auf dem Dokument vorliegen sollen, aufgebracht. Die oberste Schicht bildet eine Klebstoffschicht, beispielsweise eine Heißsiegelkleberschicht. Über diese Kleberschicht werden das Heißprägeband und das Dokument unter dem Einfluß von Wärme und Druck miteinander (hot stamping) verbunden. Das Substrat des Transferbandes kann anschließend aufgrund der Trennschicht mühelos abgezogen werden. Die Definition der zu transferierenden Flächenbereiche kann entweder über die Klebstoffschicht erfolgen, welche in einem bestimmten Muster aufgedruckt wird, so daß der zu übertragende Schichtaufbau nur stellenweise am Dokument haftet, oder über den beim Laminieren verwendeten Druckstempel, der in diesem Fall eine Umrißform aufweist, die der zu übertragenden Form entspricht, so daß auch bei der Verwendung von großflächig aufgebrachtem Heißsiegelkleber nur die Bereiche der Klebstoffschicht aktiviert werden, auf welche der Prägestempel Druck und Wärme ausübt (DE-A1 33 08 831). Beim anschließenden Abziehen des Transferbandes löst sich der Hologrammschichtaufbau im Bereich der aktivierten Klebeschicht von dem Transferband und haftet auf dem Dokument. Dies setzt jedoch voraus, daß der Hologrammschichtaufbau sehr dünn und relativ instabil ausgeführt ist, um ein sauberes Heraustrennen des Elements aus der kontinuierlichen Beschichtung des Transferbandes zu gewährleisten. Diese Forderung steht allerdings im Widerspruch zum allgemeinen Bestreben, möglichst haltbare und widerstandsfähige Hologramme herzustellen.

Um auch der Anforderung nach einem gegen mechanische oder andere Einflüsse resistenten Hologramm gerecht zu werden, wurde in der Vergangenheit bereits vorgeschlagen, im Schichtaufbau des Transferbandes eine dünne widerstandsfähige Folienschicht vorzusehen, die nach dem Übertrag auf das Endsubstrat als Schutzschicht für das Hologramm dient (EP-A2 466 118). Auf diese Weise ist zwar ein ausreichender Schutz des Hologramms gegen mechanische und andere Belastungen gewährleistet, beim Übertragen dieses Schichtaufbaus auf ein Substrat sind jedoch zusätzliche Verfahrensschritte notwendig, da die stabile Schutzschicht beim Abziehen des Transferbandes im Randbereich der aktivierten Kleberschicht nicht reißt und somit ein Herauslösen des Elements verhindert. Es ist daher notwendig, vor dem Aufbringen des Hologramms den Umriß des gewünschten Flächenelements in der Schutzfolie vorzustanzen, so daß beim Transfer ein Herauslösen des Hologramms aus den umgebenden Material möglich ist.

Eine alternative Möglichkeit, relativ haltbare Hologramm-Etiketten in einem modifizierten Transferverfahren auf Dokumente zu übertragen beschreibt die DE-A1 41 30 896. Hier erhält die Trägerfolie zuerst eine Kaltkleberschicht, über welcher schließlich der übliche Hologrammschichtaufbau in der Reihenfolge, wie er später auf dem Dokument vorliegen soll, sowie eine stabile Schutzschicht angeordnet werden. Um definierte Einzelelemente zu erzeugen, wird der Schichtaufbau angestanzt, ohne die Trägerfolie zu verletzen. Der nicht benötigte Teil des Schichtverbundes (Gitter) wird von der Trägerfolie abgezogen, so daß auf der Trägerfolie nur mehr die von einander beabstandeten Einzeletiketten vorliegen. Beim Übertrag wird die Trägerfolie abgezogen und das Etikett mittels der Kaltkleberschicht auf dem Dokument befestigt. Da die Klebstoffschicht von der Trägerfolie abgedeckt wird, ist der automatisierte Übertrag dieser Etiketten kompliziert und erfordert zusätzliche Vorrichtungskomponenten, welche die ohnehin hohen Produktionskosten von Hologrammelementen weiter erhöhen.

Die US 4,758,296 beschreibt ein Verfahren zur Herstellung von Oberflächenreliefhologrammen, bei dem ein Relieforiginal in Form eines Endlosbandes oder einer Trommel kontinuierlich mit einem strahlungshärtbaren Harz beschichtet wird. Nach dem Härten wird die Harzschicht als Bogen oder Überzug kontinuierlich vom Original abgezogen.

Aus US 5,116,548 sind Einzelhologramme auf einem Zwischenträger bekannt, die jedoch ganzflächig mit einem reflektierenden Metall beschichtet werden, wodurch die empfindliche Reflexionsschicht an den Kanten Umwelteinflüssen ausgesetzt ist. Maskierungstechniken werden eingesetzt, um unmittelbar auf einem Endgegenstand erzeugte Hologramme zu metallisieren.

In der EP-A-0 537 439 werden etikettenförmige Marken mit Beugungselementen in Form feiner Linien oder filigraner Muster beschrieben. Diese mit einem Kaltkleber auf einer Trägerfolie befestigten Etiketten sind für den direkten Transfer ungeeignet.

Vorrichtungskomponenten, welche die ohnehin hohen Produktionskosten von Hologrammelementen weiter erhöhen.

Der Erfindung liegt daher die Aufgabe zugrunde, einen Schichtverbund aus haltbaren und reißfesten Schichten vorzugschlagen, der Beugungsstrukturen enthält und eine einfache und kostengünstige Aufbringung von plazierten Einzelelementen auf zu sichernde Gegenstände im Tranferverfahren ermöglicht und einen Schutz der empfindlichen Reflexionsschicht ermöglicht.

Die Lösung dieser Aufgabe ergibt sich aus dem unabhängigen Anspruch. Weiterbildungen werden in den Unteransprüchen angegeben.

Die Erfindung basiert auf der grundlegenden Idee, bereits bei der Herstellung des Elementschichtaufbaus auf einem Substrat bzw. einer Trägerfolie die Umrißformen des zu transferierenden Einzelelements zu berücksichtigen, d.h. die Einzelelemente werden direkt auf der Trägerfolie des Schichtverbundes erzeugt. Sie weisen die für Transferelemente typische Schichtfolge auf, bei der die Klebstoffschicht die äußerste Schicht bildet, sofern diese nicht vorab auf das Dokument aufgetragen wird. Diese Schichtfolie ist jedoch in voneinander beabstandeten Bereichen auf dem Trägerband angeordnet, und die einzelnen Schichten sind so gestaltet, daß die reflektierende Schicht des auf einen Gegenstand transferierten Elements versiegelt ist.

Die erfindungsgemäße Lösung hat den Vorteil, daß für den Schichtaufbau der Einzelelemente nahezu beliebige Materialien wählbar sind, die allein nach ihrer Zweckmäßigkeit für das herzustellende Element ausgewählt werden können. Zudem sind beim Übertragen der Elemente keine zusätzlichen Vorrichtungen oder Maßnahmen notwendig, die den Transfer dieser Elemente aufwendiger gestalten und somit letztlich das Endprodukt verteuern. Da bereits bei der Herstellung des Elementschichtaufbaus auf einem Trägersubstrat die spätere geometrische Ausdehnung des Elements auf dem zu sichernden Gegenstand berücksichtigt wird, entfällt die Anforderung, daß der Schichtaufbau an den Kanten eines Heißprägestempels, wie er im üblichen hot stamping-Verfahren benutzt wird, reißen muß. Auf den Einsatz eines speziell geformten Heißprägestempels kann daher selbstverständlich auch verzichtet werden. Für den Fall, daß Heißschmelzkleber verwendet werden, genügt es daher, für eine ausreichende Wärmezufuhr zu sorgen, die den Klebstoff aktiviert.

Die im Stand der Technik notwendigen Vorrichtungen zum Vorstanzen eventuell vorhandener reißfester Schichten im Elementschichtaufbau sind beim Transfer der erfindungsgemäßen Elemente ebenfalls nicht mehr nötig. Ein weiterer Vorteil ist darin zu sehen, daß praktisch kein Überschuß an Schichtmaterial erzeugt wird. Bei herkömmlichen hot stamping-Folien, die vollflächig mit dem zu übertragenden Schichtaufbau versehen sind, werden die Elemente gemäß der gewünschten Umrißform über den Heißprägestempel ausgestanzt, so daß grundsätzlich überschüssige Reste auf dem Trägersubstrat verbleiben. Erfindungsgemäß wird jedoch nur soviel Schichtmaterial auf das Trägersubstrat aufgebracht, wie anschließend für den Übertrag benötigt wird. Nachdem Transfer der Elemente auf das Dokumentenmaterial ist das Trägersubstrat praktisch frei von jeglichem Elementschichtmaterial und kann unter Umständen erneut für die Produktion von Einzelelementen verwendet werden.

Gemäß einer bevorzugten Ausführungsform besteht der Schichtverbund aus einer Trägerfolie, auf welcher in voneinander beabstandeten Bereichen ein Reaktionslack in Form des späteren Elements aufgebracht ist. Diese Lackschicht enthält die Beugungsstrukturen in Form einer eingeprägten Reliefstruktur, welche mit einer dünnen reflektierenden Schicht, vorzugsweise einer Metallschicht versehen ist. Die plazierte Aufbringung der Metallisierung erfolgt vorzugsweise über eine Maskierung mittels chemisch löslicher Druckfarben. Die mit den geprägten Lackbereichen versehene Trägerfolie wird hierbei in den später metallfreien Bereichen mit einer löslichen Farbe bedruckt und anschließend z. B. in einer Vakuumdampfanlage vollflächig metallisiert. In einem Lösungsbad wird die Druckfarbe zusammen mit den direkt darüber angeordneten Teilen der Metallschicht abgewaschen. Es bleibt die metallisierte Prägung auf der Trägerfolie zurück. Beim Aufbringen auf einen zu schützenden Gegenstand, z. B. ein Wertdokument oder eine Warenverpackung wird vorzugsweise der Gegenstand mit einer Klebstoffschicht versehen, deren Ausdehnung unter Berücksichtigung von Toleranzen größer als das zu plazierende Element ist.

Um ein gutes Ablösen des Elementschichtaufbaus von der Trägerfolie zu gewährleisten, kann sie mit einer Trennschicht versehen werden. Hierbei handelt es sich vorzugsweise um kaltablösende Reaktionslacke, wie sie aus der P 44 04 128.4 bekannt sind. Weitere Ausführungsformen der Erfindung sowie deren Vorteile werden anhand der Figuren erläutert. Die einzelnen Schichten der in den Figuren gezeigten Schichtaufbauten sind des besseren Verständnisses wegen übertrieben dick und nicht maßstabsgetreu dargestellt. Es zeigen:
- Fig. 1: ein Wertdokument mit einem plazierten Einzelhologramm
- Fig. 2: einen Schichtverbund gemäß der Erfindung
- Fig. 3a bis 3f: Herstellung des erfindungsgemäßen Schichtverbunds und Übertrag eines Einzelelements auf einen zu sichernden Gegenstand
- Fig. 4: eine weitere Ausführungsform des erfindungsgemäßen Schichtverbunds
- Fig. 5: Übertrag eines Einzelelements auf einen zu sichernden Gegenstand.

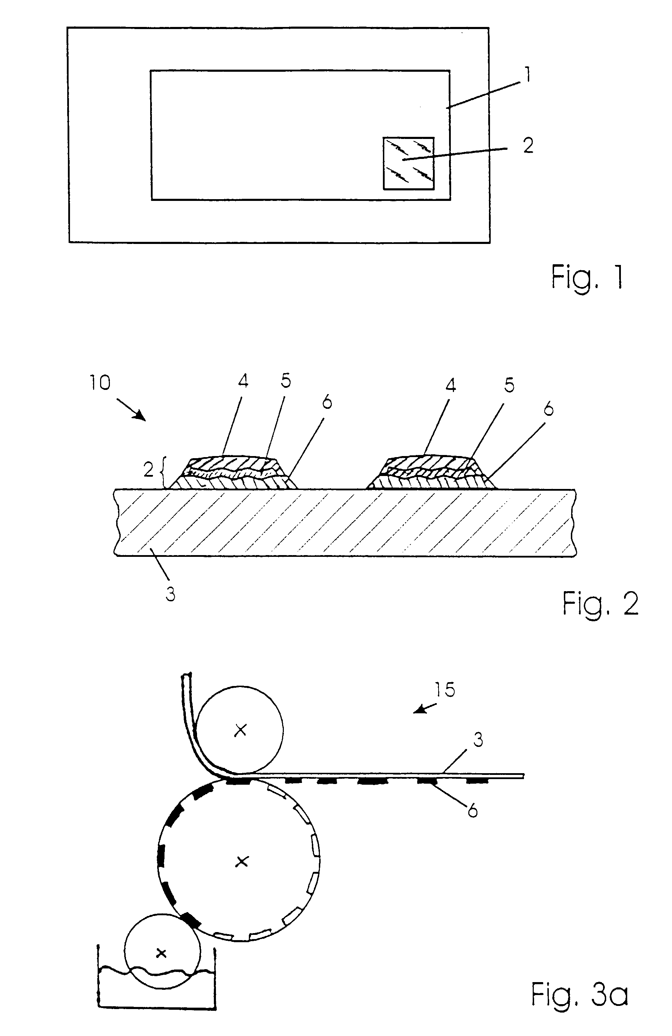

Fig. 1 zeigt eine Banknote 1 mit einem optisch variablen Element 2 gemäß der vorliegenden Erfindung. Bei dem optisch variablen Element 2 handelt es sich vorzugsweise um ein Reflexions-Hologramm, das im Transferverfahren als plaziertes Einzelelement auf das Dokument 1 übertragen wurde.

In Fig. 2 ist ein erfindungsgemäßer Schichtverbund 10 dargestellt, der aus einem Substrat 3 besteht, auf dem in von einander beabstandeten Bereichen holografische Einzelelemente 2 angeordnet sind. Die hier gezeigten Elemente 2 setzen sich aus einer geprägten Lackschicht 6, einer die Prägung abdeckenden Metallschicht 5 sowie einer weiteren Lackschicht 4, welche als Schutzschicht dient, zusammen. Die Schutzschicht besteht vorzugsweise ebenfalls aus einer Reaktionslackschicht.

Da die Elemente 2 auf dem Trägersubstrat als isolierte Einzelelemente erzeugt werden, kann der Schichtaufbau auch aus beliebigen anderen Schichtmaterialien zusammengesetzt sein. So können beispielsweise statt der Lackschicht 6 stabile thermoplastische Schichten verwendet werden, wie sie beispielsweise in der EP A2 0 466 118 beschrieben sind. Ebenso ist es beispielsweise möglich, statt der Metallschicht 5 eine dielektrische Schicht mit entsprechend angepaßtem Brechungsindex zu verwenden. Als Substrat 3 kann jedes Material Anwendung finden, das die gewünschten Forderungen an die Reißfestigkeit und Haftcharakteristik erfüllt, vorzugsweise wird jedoch eine Kunststoffolie verwendet.

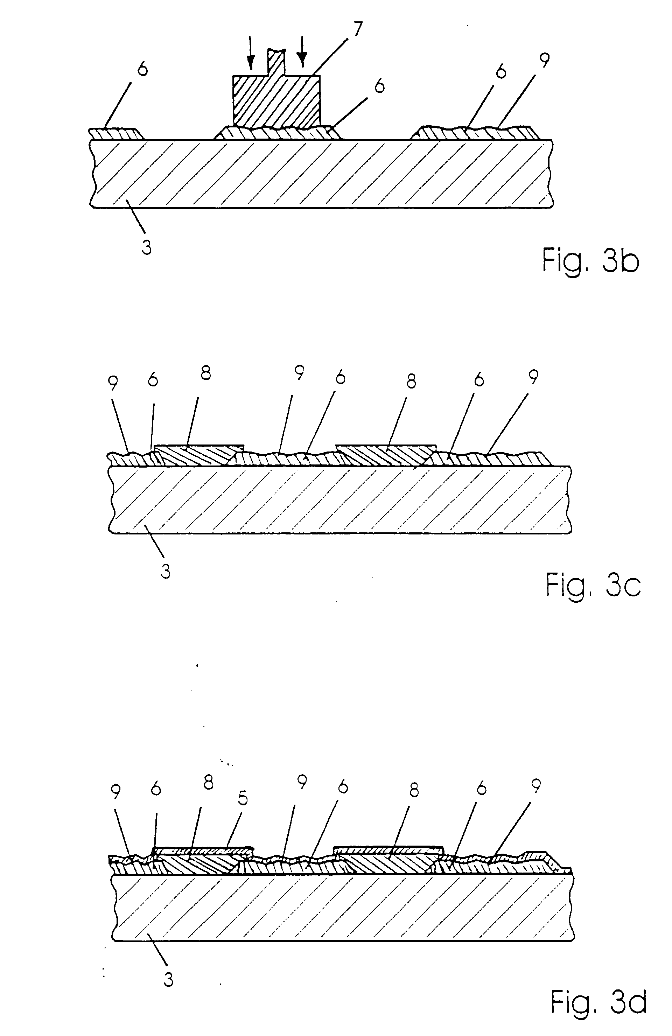

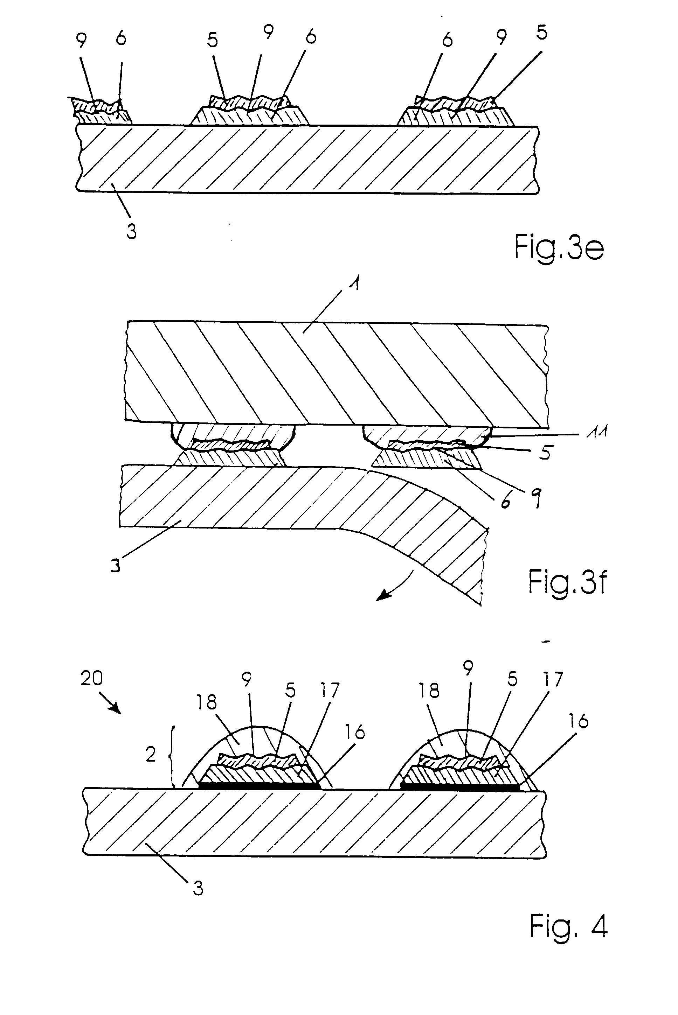

Anhand der Fig. 3 wird im folgenden das Herstellungsverfahren sowie der Transfer eines Einzelelements 2 auf einen zu sichernden Gegenstand beschrieben. In einem ersten Schritt wird das Trägerband 3 in vorzugsweise regelmäßigen Abständen mit der Lackschicht 6 in der Größe und Gestalt des zu plazierenden Hologramms bedruckt. Wie in Fig. 3a schematisch dargestellt, kann dies in einem Rastertiefdruckwerk 15 erfolgen. Aber auch jedes andere Beschichtungs- bzw. Druckverfahren (z. B. Siebdruck) ist denkbar.

Bei der verdruckten Lackschicht 6 kann es sich um eine Reaktionslackschicht, z. B. einen UV- bzw. blaulichthärtbaren oder UV-initiierbaren Lack handeln, wie sie in der deutschen Patentanmeldung P 4404128.4 beschrieben sind, auf welche an dieser Stelle ausdrücklich Bezug genommen wird.

Anschließend wird diese bedruckte Trägerfolie 3 im Bereich der Lackbeschichtung 6 mit der Beugungsstruktur 9 versehen, indem ein Prägestempel 7, der die zu übertragende Reliefstruktur 9 aufweist, mit der Lackschicht 6 in Kontakt gebracht und die Lackschicht 6 gleichzeitig ausgehärtet wird (Fig. 3b).

Gemäß Fig. 3c wird die Trägerfolie im nächsten Prozeßschritt in denjenigen Bereichen, die im fertigen Schichtverbund keine Metallisierung tragen sollen, mit einer chemisch löslichen Druckfarbe 8 bedruckt. Da die flächige Ausdehnung des Lackschichtbereichs 6 um Toleranzen in der Registerführung ausgleichen zu können, größer ist als der tatsächliche Prägebereich 9, werden auch die Randbereiche der Lackschicht 6 mit der löslichen Druckfarbe 8 bedruckt, so daß im wesentlichen allein die Prägestruktur 9 unbedruckt bleibt. Die derart präparierte Trägerfolie 3 erhält anschließend eine vollflächige Metallisierung 5, die sowohl die Druckfarbenbereiche 8 als auch die Prägestruktur 9 abdeckt (Fig. 3d). Die Metallisierung kann nach einem der Standardverfahren, wie z. B. dem Vakuumdampfverfahren erfolgen. Im folgenden Schritt werden die lösliche Druckfarbe 8 und der darüberliegende Teil der Metallschicht 5 in einem geeigneten Lösungsbad entfernt. Wie in Fig. 3e dargestellt, verbleiben auf der Trägerfolie 3 lediglich die geprägten Lackbereiche 6 und die die Prägung 9 bedeckende Metallschicht 5. Statt der oben beschriebenen Maskierung über eine chemisch lösliche Druckfarbe kann selbstverständlich auch jedes andere Maskierungsverfahren eingesetzt werden, um die Prägung zu metallisieren.

Die Metallisierung kann nun wahlweise mit einer Schutzschicht 4, wie in Fig. 2 gezeigt, abgedeckt werden. Für den Transfer des Elements 2 auf einen zu schützenden Gegenstand wird entweder der Gegenstand oder der Elementbereich 2 der Trägerfolie 3 mit einer Klebstoffschicht 11, vorzugsweise einem Reaktionskleber, versehen, wobei der Klebstoff 11 im Hinblick auf etwaige Toleranzprobleme eine größere Fläche einnimmt als das tatsächlich zu transferierende Element 2. Schließlich wird der Schichtverbund 10 im Bereich des Elements 2 mit der vorbestimmten Stelle des Banknotensubstrats in Kontakt gebracht und der Klebstoff 11 ausgehärtet. In einem letzten Schritt wird das Trägerband 3 abgezogen (Fig. 3f).

Das plazierte Hologramm besteht nun aus einem geprägten, metallisierten inneren Bereich und einem durchsichtigen, schmalen Randbereich, in dem sich Lack- und Kleberschicht überlappen und welcher nicht nur die Herstellungstoleranzen auffängt, sondern auch die Metallschicht versiegelt und so vor schädlichen Umwelteinflüssen schützt.

Um das Ablösen der Elemente von der Trägerfolie zu erleichtern, kann die Folie vor der Beschichtung mit den inselförmigen Lackbereichen mit einer wachsartigen Trennschicht, z.B. einer leicht ablösenden Reaktionslackschicht, bedruckt werden.

Da Sicherheitspapiere eine relativ rauhe Oberfläche aufweisen, um Stahltiefdruckfarbe aufnehmen zu können, und diese Rauhigkeit unter Umständen den visuellen Eindruck der Beugungsstrukturen stören kann, ist es häufig von Vorteil, den für die Aufnahme des Sicherheitselements bestimmten Bereich des Papiers vor der Übertragung zu glätten. Dies kann durch Komprimierung des Papiers und/oder durch das Aufbringen einer glättend wirkenden Primerschicht geschehen.

In einer Variante der oben beschriebenen Ausführungsform können durch teilweises Bedrucken des Prägebereichs bzw. Nichtbedrucken des Randbereichs der Lackschicht 6 mit der Druckfarbe 8 (siehe Fig. 3c) zusätzliche optische Effekte erzeugt werden. So kann durch zusätzliches Bedrucken des Prägebereichs in Form von Zeichen, Mustern oder ähnlichem ein weiterer metallfreier Bereich innerhalb der Hologrammprägung 9 hergestellt werden, der z. B. eine lesbare Information darstellt.

Die Anwendung des beschriebenen Verfahrens ist selbstverständlich nicht auf das Übertragen von Hologrammen auf Banknoten beschränkt. So können auch Interferenzschichtelemente oder andere Schichtaufbauten mit betrachtungswinkelabhängigen optischen Effekten auf der Trägerfolie plaziert erzeugt und analog zu dem oben für Hologramme beschriebenen Verfahren auf beliebige zu schützende Gegenstände, wie Warenverpackungen, Waren selbst oder Ausweiskarten übertragen werden.

Das erfindungsgemäße Verfahren kann jedoch auch vorteilhaft bei herkömmlichen thermoplastischen Hologrammschichten verwendet werden, da diese nicht länger reißbar sondern so stabil wie möglich gestaltet werden können. In diesem Fall wird die Trägerfolie 3 in einem ersten Schritt mit einer z.B. wachsartigen Trennschicht 16 vollflächig oder ebenfalls plaziert bedruckt. Im Anschluß daran erfolgt das Bedrucken der Trägerfolie mit einem thermoplastischem Lack 17, wie in Fig. 3a gezeigt. Die folgenden Herstellungsschritte verlaufen analog zu den in Fig. 3b bis 3e dargestellten. In einem letzten Schritt wird die Kleberschicht 18 auf den Elementschichtaufbau aufgebracht, wobei auch diese Schicht etwas größer dimensioniert sein sollte als die geprägte Lackschicht 17, um Toleranzen auszugleichen und die Metallschicht zu versiegeln. Den Schichtaufbau dieses Schichtverbunds 20 zeigt Fig. 4. Bei der Kleberschicht 18 kann es sich entweder um einen der bereits erwähnten Reaktionslacke oder auch um einen Heißschmelzkleber handeln.

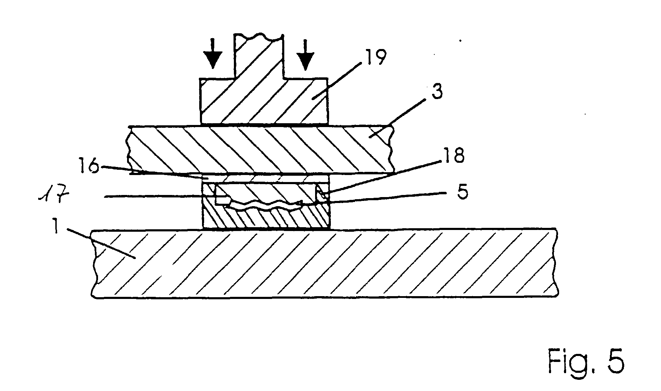

Der Übertrag der derart präparierten Einzelelemente 2 erfolgt mit Hilfe eines beheizten Stempels 19, der den Heißschmelzkleber 18 aktiviert und den Elementschichtaufbau 2 auf dem Substrat 1 fixiert (Fig. 5). Schließlich wird in einem letzten Schritt die Trägerfolie 3 abgezogen.

## Patentansprüche

1. Transfermaterial (10, 20) zum Übertragen von optisch variablen Elementen (2) von einem Trägersubstrat (3) auf zu sichernde Gegenstände (1), insbesondere Wertdokumente, wie Banknoten oder Ausweiskarten, wobei die Elemente (2) auf dem Trägersubstrat (3) als voneinander beabstandete Einzelelemente vorliegen und das Transfermaterial im Bereich der Elemente folgende Schichtreihenfolge aufweist:
- Trägersubstrat (3),
- gegebenenfalls eine Trennschicht (16),
- eine Schicht (6,17), in die Beugungsstrukturen (9) in Form eines Reliefs eingebracht sind und die Schicht (6,17) die Umrißform des zu übertragenden Elements (2) aufweist,
- eine reflektierende Schicht (5),die nur im inneren Bereich der die Beugungsstrukturen aufweisenden Schicht (6,17) vorliegt, so daß auf dieser Schicht (6,17) ein schmaler reflexionsschichtfreier Randbereich vorhanden ist.

2. Transfermaterial nach Anspruch 1, dadurch **gekennzeichnet**, daß die Beugungsstrukturen (9) in einem inneren Bereich der Schicht (6,17) vorliegen.

3. Transfermaterial nach Anspruch 1 oder 2, dadurch **gekennzeichnet**, daß im Bereich der Elemente (2) auf der dem Trägersubstrat (3) abgewandten Oberfläche des Transfermateriales (10, 20) eine zusätzliche Schicht (4,18) angeordnet ist, die mit dem schmalen reflexionsschichtfreien Rand der die Beugungsstrukturen aufweisenden Schicht (6,17) überlappt und dadurch die reflektierende Schicht (5) versiegelt.

4. Transfermaterial nach Anspruche 3, dadurch **gekennzeichnet**, daß die zusätzliche Schicht eine Kleberschicht (18) ist.

5. Transfermaterial nach wenigstens einem der Ansprüche 1 bis 4, dadurch **gekennzeichnet**, daß die reflektierende Schicht (5) eine Metallschicht ist.

6. Transfermaterial nach wenigstens einem der Ansprüche 1 bis 5, dadurch **gekennzeichnet**, daß die die Beugungsstrukturen aufweisende Schicht (6,17) eine Reaktionslackschicht oder eine thermoplastische Schicht ist.

7. Transfermaterial nach Anspruch 4, dadurch **gekennzeichnet**, daß die Kleberschicht (18) größer dimensioniert ist als die die Beugungsstrukturen aufweisende Schicht (6,17), das Trägersubstrat (3) aber nicht vollflächig bedeckt.

8. Transfermaterial nach wenigstens einem der Ansprüche 4 oder 7, dadurch **gekennzeichnet**, daß die Kleberschicht (18) ein Reaktions- oder ein Heißschmelzkleber ist.

9. Transfermaterial nach wenigstens einem der Ansprüche 1 bis 8, dadurch **gekennzeichnet**, daß die reflektierende Schicht (5) Aussparungen in Form von Zeichen oder Mustern aufweist.

10. Transfermaterial nach wenigstens einem der Ansprüche 1 bis 9, dadurch **gekennzeichnet**, daß der Schichtverbund zwischen Trägersubstrat (3) und der die Beugungsstrukturen aufweisenden Schicht (6,17) eine wachsartige Trennschicht (16) aufweist.

11. Verfahren zur Herstellung eines Transfermaterials nach Anspruch 1 zum Übertragen von optisch variablen Elementen auf zu sichernde Gegenstände, insbesondere Wertdokumente, wie Banknoten oder Ausweiskarten, **gekennzeichnet** durch die folgenden Schritte:
a) Bereitstellen eines Trägersubstrats;
b) partielles, abschnittsweises Beschichten einer Oberfläche des Trägersubstrats mit einer prägbaren Schicht, wobei diese Schicht in der Umrißform des zu übertragenden Elements aufgebracht wird;
c) Einbringen der Beugungsstrukturen in die prägbare Schicht;
d) Maskieren des Trägersubstrats in den Bereichen, in denen keine prägbare Schicht aufgebracht wurde und eines schmalen Randbereichs der Schicht, die mit den Beugungsstrukturen versehen wurde;
e) Aufbringen der reflektierenden Schicht;
f) Entfernen der Maskierung und der sich auf der Maskierung befindenden reflektierenden Schicht.

12. Verfahren nach Anspruch 11, dadurch **gekennzeichnet**, daß die Maskierung mittels chemisch löslicher Druckfarben erfolgt.

13. Verfahren nach Anspruch 11, dadurch **gekennzeichnet**, daß die reflektierende Schicht eine Metallschicht ist.

14. Verfahren nach einem der Ansprüche 11 bis 13, dadurch **gekennzeichnet**, daß das Trägersubstrat eine Kunststoffolie ist.

15. Verfahren nach Anspruch 14, **gekennzeichnet,** durch folgende Schritte:
g) in Schritt d) bedrucken der nicht zu metallisierenden Bereiche mit einer chemisch löslichen Druckfarbe;
h) in Schritt e) vollflächiges Metallisieren der bedruckten Oberfläche der Kunststoffolie;
i) in Schritt f) Ablösen der löslichen Druckfarbe und der darüberliegenden Metallisierung, so daß die Metallisierung lediglich in den zuvor druckfarbenfreien Bereichen zurückbleibt.

16. Verfahren nach Anspruch 15, dadurch **gekennzeichnet,** daß das Metallisieren in Schritt h) nach dem Vakuumdampfverfahren erfolgt.

17. Verfahren nach wenigstens einem der Ansprüche 11 bis 16, dadurch **gekennzeichnet**, daß das Trägersubstrat vor Schritt b) zumindest partiell mit einer wachsartigen Trennschicht bedruckt wird.

18. Verfahren nach wenigstens einem der Ansprüche 11 bis 17, dadurch **gekennzeichnet**, daß in Schritt b) ein Reaktionslack oder ein thermoplastischer Lack verdruckt wird.

19. Verfahren nach wenigstens einem der Ansprüche 11 bis 18, dadurch **gekennzeichnet**, daß in der reflektierenden Schicht Aussparungen in Form von Zeichen oder Mustern erzeugt werden.

## Claims

1. A transfer material (10, 20) for transferring optically variable elements (2) from a carrier substrate (3) to objects (1) to be protected, particularly documents of value such as bank notes or identity cards, the elements (2) being present on the carrier substrate (3) as spaced apart single elements and the transfer material having the following sequence of layers in the area of the elements:
- carrier substrate (3),
- optionally a separation layer (16),
- a layer (6, 17) in which diffraction structures (9) are incorporated in the form of a relief and the layer (6, 17) has the contour shape of the element (2) to be transferred,
- a reflecting layer (5) which is only present in the inner area of the layer (6, 17) having the diffraction structures so that a narrow edge area free from reflecting layer is present on said layer (6, 17).

2. A transfer material according to claim 1, characterized in that the diffraction structures (9) are present in an inner area of the layer (6, 17).

3. A transfer material according to claim 1 or 2, characterized in that in the area of the elements (2) on the surface of the transfer material (10, 20) facing away from the carrier substrate (3) there is an additional layer (4, 18) which overlaps with the narrow edge free from reflecting layer on the layer (6, 17) having the diffraction structures, thereby sealing the reflecting layer (5).

4. A transfer material according to claim 3, characterized in that the additional layer is an adhesive layer (18).

5. A transfer material according to at least one of claims 1 to 4, characterized in that the reflecting layer (5) is a metal layer.

6. A transfer material according to at least one of claims 1 to 5, characterized in that the layer (6, 17) having the diffraction structures is a layer of reaction lacquer or a thermoplastic layer.

7. A transfer material according to claim 4, characterized in that the adhesive layer (18) has larger dimensions than the layer (6, 17) having the diffraction structures but does not completely cover the carrier substrate (3).

8. A transfer material according to at least one of claims 4 and 7, characterized in that the adhesive layer (18) is a reaction adhesive or hot-melt adhesive.

9. A transfer material according to at least one of claims 1 to 8, characterized in that the reflecting layer (5) has gaps in the form of characters or patterns.

10. A transfer material according to at least one of claims 1 to 9, characterized in that the laminar compound has a waxy separation layer (16) between carrier substrate (3) and the layer (6, 17) having the diffraction structures.

11. A method for producing a transfer material according to claim 1 for transferring optically variable elements to objects to be protected, particularly documents of value such as bank notes or identity cards, characterized by the following steps:
a) providing a carrier substrate;
b) coating partially, in sections, a surface of the carrier substrate with an embossable layer, said layer being applied in the contour shape of the element to be transferred;
c) incorporating the diffraction structures in the embossable layer;
d) masking the carrier substrate in the areas where no embossable layer was applied, and a narrow edge area of the layer which was provided with the diffraction structures;
e) applying the reflecting layer;
f) removing the masking and the reflecting layer located on the masking.

12. A method according to claim 11, characterized in that the masking is done using chemically soluble inks.

13. A method according to claim 11, characterized in that the reflecting layer is a metal layer.

14. A method according to any of claims 11 to 13, characterized in that the carrier substrate is a plastic film.

15. A method according to claim 14, characterized by the following steps:
g) printing the areas not to be metalized with a chemically soluble ink in step d);
h) metalizing the printed surface of the plastic film all over in step e);
i) detaching the soluble ink and the metalizing located thereabove in step f) so that the metalizing remains solely in the previously ink-free areas.

16. A method according to claim 15, characterized in that the metalizing in step h) is done by vacuum evaporation.

17. A method according to at least one of claims 11 to 16, characterized in that the carrier substrate is printed before step b) at least partially with a waxy separation layer.

18. A method according to at least one of claims 11 to 17, characterized in that a reaction lacquer or thermoplastic lacquer is printed in step b).

19. A method according to at least one of claims 11 to 18, characterized in that gaps are produced in the reflecting layer in the form of characters or patterns.

## Revendications

1. Matériau de transfert pour transférer des éléments optiquement variables (2) depuis un site (3) support (3) aux objets (1) à protéger, en particulier des documents de valeur, tels que des billets de banque ou des cartes d'identité, les éléments (2) se présentant sur le substrat support (3) Sous la limite d'éléments individuels espacés les uns des autres et le matériau de transport présentant, dans la zone des éléments, l'ordre de succession de couches suivantes :
- substrat support (3),
- le cas échéant une couche séparatrice (16),
- une couche (6, 17) dans laquelle des structures de diffraction (9), se présentant sous la forme d'un relief, sont introduites, et la couche (6, 17) présentant la forme de contour de l'élément (2) à transférer,
- une couche réfléchissante (5), qui se présente uniquement dans la zone intérieure de la couche présentant les structures de diffraction couche (6, 17), si bien qu'une étroite zone de bordure, exempte de couche de réflexion, est prévue sur cette couche (6, 17).

2. Matériau de transfert selon la revendication 1, caractérisé en ce que les structures de diffraction (9) se présentent dans une zone inférieure de la couche (6, 17).

3. Matériau de transfert selon la revendication 1 ou 2, caractérisé en ce que, dans la zone des éléments (2), sur la surface, opposée du substrat support (3), du matériau de transport (10, 20), est disposée une couche supplémentaire (4, 18), qui est chevauchée par la bordure étroite, exempte de couche de réflexion, de la couche (6, 17), présentant les structures de diffraction afin de sceller de ce fait la couche réfléchissante (5).

4. Matériau de transfert selon la revendication 3, caractérisé en ce que la couche supplémentaire est une couche adhésive (18).

5. Matériau de transfert selon au moins l'une des revendications 1 à 4, caractérisé en ce que la couche réfléchissante (5) est une couche métallique.

6. Matériau de transfert selon au moins l'une des revendications 1 à 5, caractérisé en ce que la couche (6, 17) présentant les structures de diffraction est une couche de vernis de réaction ou bien une couche thermoplastique.

7. Matériau de transfert selon la revendication 4, caractérisé en ce que la couche d'adhésif (18) est de dimension plus grande que la couche (6, 17) présentant les structures de diffraction, en ne recouvrant cependant pas sur toute la surface le substrat support (3).

8. Matériau de transfert selon au moins l'une des revendications 4 ou 7, caractérisé en ce que la couche d'adhésif (18) est un adhésif à réaction ou un adhésif thermofusible.

9. Matériau de transfert selon au moins l'une des revendications 1 à 8, caractérisé en ce que la couche de réflexion (5) présente des évidements réalisés sous la forme de caractères ou de motifs.

10. Matériau de transfert selon au moins l'une des revendications 1 à 9, caractérisé en ce que la liaison entre couches, entre le substrat support (3) et la couche (6, 17) présentant les structures de diffraction, présente une couche séparatrice (17) du genre d'une cire ou paraffine.

11. Procédé de préparation d'un matériau de transfert selon la revendication 1, pour transférer des éléments optiquement variables à des objets à protéger, en particulier des documents de valeur, tels que des billets de banque ou des cartes d'identité, caractérisé par les étapes suivantes :
a) fourniture d'un substrat support ;
b) enduction par tronçons, partielle, d'une surface du substrat support, par une couche susceptible d'être formée tridimensionnellement, cette couche étant appliquée dans la forme de profil de l'élément à transférer ;
c) introduction des structures de diffraction dans la couche susceptible d'être formée en relief;
d) masquage du substrat support dans les zones dans lesquelles aucune couche susceptible d'être formée tridimensionnellement n'a été appliquée et d'une étroite zone de bordure de la couche, ayant été dotée des structures de diffraction ;
e) application de la couche réfléchissante ;
f) enlèvement du masquage et de la couche réfléchissante, se trouvant sur le masquage.

12. Procédé selon la revendication 11, caractérisé en ce que le masquage s'effectue à l'aide d'encres d'impression solubles chimiquement.

13. Procédé selon la revendication 11, caractérisé en ce que la couche réfléchissante est une couche métallique.

14. Procédé selon l'une des revendications 11 à 13, caractérisé en ce que le substrat support est une feuille de matière synthétique.

15. Procédé selon la revendication 14, caractérisé par les étapes suivantes :
g) à l'étape d), impression des zones non métallisées par une encre d'impression soluble chimiquement ;
h) à l'étape e), métallisation complète de la surface imprimée de la feuille de matière synthétique ;
i) à l'étape f), désolidarisation de l'encre d'impression soluble et de la métallisation située au-dessus, si bien que la métallisation ne subsiste uniquement que dans les zones préalablement exemptes d'impression.

16. Procédé selon la revendication 15, caractérisé en ce que la métallisation s'effectue à l'étape h) selon le procédé d'évaporation sous vide.

17. Procédé selon au moins l'une des revendications 11 à 16, caractérisé en ce que le substrat support est imprimé avant l'étape b), au moins partiellement, par une couche séparatrice du genre d'une cire.

18. Procédé selon au moins l'une des revendications 11 à 17, caractérisé en ce qu'un vernis de réaction ou un vernis thermoplastique est imprimé à l'étape b).

19. Procédé selon au moins l'une des revendications 11 à 18, caractérisé en ce que des évidements, réalisés sous la forme de caractères ou de motifs, sont générés dans la couche réfléchissante.
